Europäisches Patentamt

European Patent Office

Office européen des brevets

(11) Numéro de publication : **0 469 991 B1**

(12) **FASCICULE DE BREVET EUROPEEN**

(45) Date de publication du fascicule du brevet :
15.03.95 Bulletin 95/11

(51) Int. Cl.⁶ : **G01P 5/16**

(21) Numéro de dépôt : **91402132.4**

(22) Date de dépôt : **30.07.91**

(54) **Sonde d'aéronef pour la mesure des paramètres aérodynamiques de l'écoulement ambiant.**

(30) Priorité : **03.08.90 FR 9009956**

(43) Date de publication de la demande :
**05.02.92 Bulletin 92/06**

(45) Mention de la délivrance du brevet :
**15.03.95 Bulletin 95/11**

(84) Etats contractants désignés :
**DE GB**

(56) Documents cités :
**EP-A- 0 176 405**
**FR-A- 2 323 137**
**GB-A- 1 181 669**
**US-A- 3 699 811**

(73) Titulaire : **SEXTANT AVIONIQUE**
**5/7 rue Jeanne Braconnier**
**Parc Tertiaire**
**F-92368 Meudon la Forêt Cédex (FR)**

(72) Inventeur : **Beigbeder, Gérard**
**108 rue Saint Maur**
**F-75011 Paris (FR)**
Inventeur : **Leblond, Henri**
**25 rue Montebello**
**F-78000 Versailles (FR)**

(74) Mandataire : **Bloch, Gérard et al**
**2, square de l'Avenue du Bois**
**F-75116 Paris (FR)**

## Description

La présente invention concerne une sonde d'aéronef, pour la mesure des paramètres aérodynamiques de l'écoulement ambiant de l'aéronef, comprenant une girouette montée rotative sur l'aéronef, destinée à s'orienter dans la direction de l'écoulement et pourvue de moyens de prise de pression différentielle représentative de l'incidence aérodynamique de la girouette, et des moyens pour déterminer l'orientation de la girouette par rapport à l'aéronef.

Le pilotage de tout aéronef implique de connaitre sa vitesse relative par rapport à l'air, c'est-à-dire au vent relatif. Cette vitesse est déterminée à l'aide de capteurs de la pression statique po, de la pression totale pt, de l'angle d'incidence $\alpha$ et de l'angle de dérapage $\beta$ . $\alpha$ et $\beta$ fournissent la direction du vecteur vitesse dans un système de référence, ou référentiel, lié à l'aéronef et pt - po fournit le module de ce vecteur vitesse. Les quatre paramètres aérodynamiques permettent donc de déterminer le vecteur vitesse d'un avion et, accessoirement, d'un aéronef à rotor basculant dit convertible.

On connait déjà une sonde du type mentionné ci-dessus par le document EP-A-0 176 405. Elle présente l'avantage d'assurer plusieurs fonctions et d'éviter ainsi la trop grande multiplicité de capteurs qui étaient fragiles, dont il fallait assurer la maintenance et qui étaient consommateurs d'énergie de dégivrage. Elle présente aussi l'avantage, par rapport aux sondes multifonctionnelles statiques, à antenne fixe, par exemple du type décrit dans le document US-A-4 096 744, d'offrir une relativement bonne précision, surtout aux grandes incidences.

En fait, la girouette de la sonde antérieure est soumise non seulement au couple aérodynamique produit par le vent relatif mais également à un couple de frottement s'exerçant sur son arbre, si bien qu'elle ne s'oriente pas exactement dans la direction de l'écoulement. En d'autres termes, l'incidence aérodynamique de la girouette, c'est-à-dire l'angle formé entre la direction de l'écoulement et le plan de la girouette, n'est pas nul.

EP-A-0 176 405 enseigne de déterminer l'incidence de la girouette, à l'aide de la mesure de pression différentielle, et de calculer la somme de cette incidence et de l'orientation relative de la girouette par rapport à l'aéronef pour obtenir l'incidence vraie de l'aéronef.

Il en résulte que l'exploitation de la sonde de ce document, qui met donc en oeuvre des moyens de calcul, n'est pas des plus aisées et est assez onéreuse. Pour les avions civils subsoniques, c'est un inconvénient.

La présente invention vise à pallier cet inconvénient.

A cet effet, elle concerne une sonde du type mentionné ci-dessus, caractérisé par le fait qu'elle comporte des moyens d'annulation de l'incidence aérodynamique de la girouette, constitués d'un moteur et d'une boucle d'asservissement.

L'invention tire son intérêt du fait que, l'incidence de la girouette étant nulle, l'orientation relative de la girouette par rapport à l'aéronef fournit directement l'incidence vraie de l'aéronef. Il n'est plus nécessaire de procéder au moindre calcul.

L'invention est remarquable par le fait que, alors qu'on dispose de moyens de calcul de plus en plus puissants et précis, la demanderesse a cherché au contraire à s'affranchir de tout moyen de calcul.

Dans la forme de réalisation préférée de la sonde de l'invention, les moyens d'annulation de l'incidence de la girouette sont commandés par les moyens de prise de pression différentielle.

Avantageusement, les moyens de prise de pression différentielle commandent une boucle d'asservissement agencée pour exercer un couple moteur sur la girouette destiné à s'opposer au couple de frottement.

De préférence encore, la girouette étant pourvue d'une prise de pression totale et d'une prise de pression statique, les moyens d'annulation de l'incidence de la girouette sont commandés et par les moyens de prise de pression différentielle et par les prises de pression totale et de pression statique, pour s'affranchir de la vitesse de l'aéronef.

L'invention sera mieux comprise à l'aide de la description suivante de la forme de réalisation préférée de la sonde de l'invention, en référence au dessin annexé, sur lequel
- la figure 1 est une vue schématique en perspective en plan de la girouette et du boîtier de traitement de la sonde;
- la figure 2 est une vue en coupe de la girouette et
- la figure 3 est une représentation synoptique de la boucle d'asservissement de la girouette.

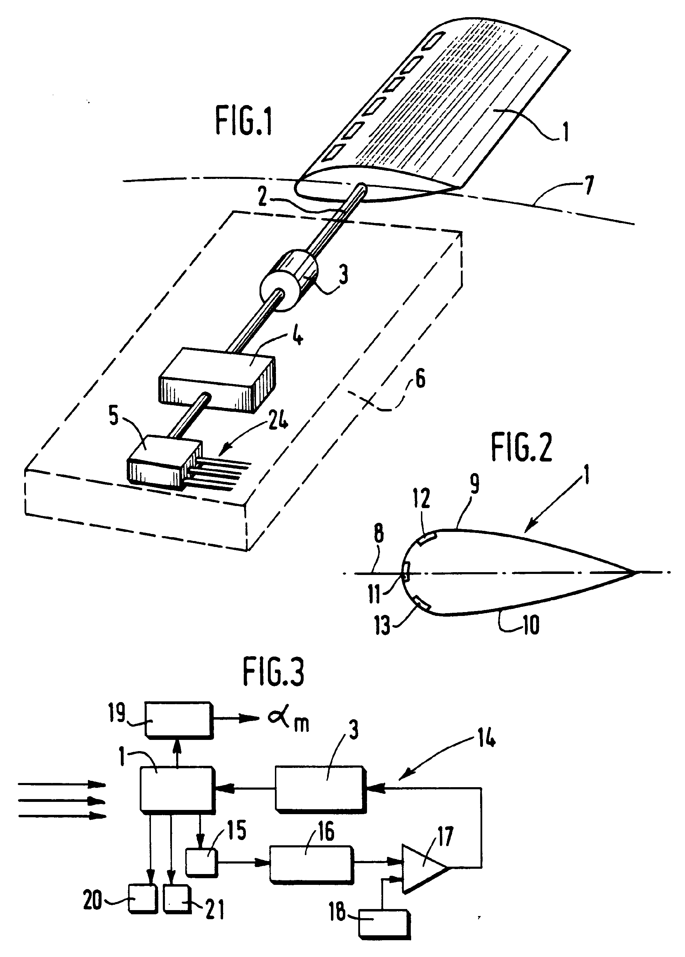

La sonde, en l'espèce multifonctionnelle, de la figure 1 comporte une girouette 1 montée sur un arbre 2 portant un moteur d'asservissement 3. L'arbre 2 est solidaire d'un organe 4 de recopie de position angulaire et il porte un joint pneumatique 5 destiné à transmettre vers des équipements de traitement 14 les pressions prélevées sur la girouette. Tous ces éléments sont contenus dans un boîtier 6, disposé en deça de la peau 7 de l'aéronef, à l'intérieur de celui-ci, la girouette 1 s'étendant au-delà de la peau 7 mais pratiquement contre elle, avec son arbre 2 sensiblement perpendiculaire au plan de symétrie de l'aéronef.

La girouette 1 est constituée d'une aile cylindrique possèdant un plan de symétrie 8 séparant l'extrados 9 de l'intrados 10. En l'espèce, le profil de l'aile, perpendiculaire à l'arbre 2, est du type OOZT du N.A.C.A. Il ne s'agit toutefois pas d'une limitation de l'invention. L'aile 1 comporte des prises de pression ici constituées d'orifices calibrés ménagés dans l'aile et alignés le long de trois génératrices du cylindre de l'aile. Une première série d'orifices 11, de prise de pression totale, s'étendent dans le plan de symétrie 8. Une deuxième série d'orifices 12 d'extrados et une troisième série d'orifices 13 d'intrados s'étendent respectivement le long de deux génératrices symétriques par rapport au plan 8 et permettent de saisir la pression statique. Les orifices de prise de pression des trois génératrices débouchent respectivement dans trois tubes collecteurs communs 24 traversant l'arbre 2 de la sonde et le joint pneumatique 5.

A propos de ces orifices de prise de pression, quelques remarques, bien qu'inutiles pour l'homme du métier, peuvent néanmoins éclairer le lecteur.

En toute rigueur, un orifice par génératrice pourrait suffir. Il en est prévu toute une série par sécurité. Une des deux séries d'orifices d'extrados et d'intrados pourrait aussi suffir pour obtenir la pression statique. On préfère faire la moyenne des deux. Les génératrices ne sont pas placées au hasard. Sur un cylindre de section circulaire, on sait les placer. Sur le cylindre de l'aile de la sonde de l'invention, c'est plus délicat. En fait, on recherche, pour chacune des deux génératrices d'extrados et d'intrados, celle pour laquelle la dérivée de la pression fournie, par rapport à l'écart latéral, est quasiment nulle.

L'arbre 2 de la girouette 1 est naturellement soumis à un couple de frottement Cf qui, en l'absence d'asservissement, empêche la girouette 1 de s'orienter dans la direction de l'écoulement d'air. En d'autres termes, celle-ci forme avec le plan de symétrie 8 de la girouette un angle i. Dans le cas d'une incidence i de la girouette, le couple aérodynamique Ca qui s'exerce sur elle est donné par la formule

$$C_a = K V^2 i$$

dans laquelle

K          est une constante,

V          est la vitesse conventionnelle, c'est-à-dire la vitesse relative de l'air ramenée au niveau de la mer,

$K V^2$          est la raideur de la girouette.

Dans la position d'équilibre de la girouette, à incidence i et toujours en l'absence d'asservissement,

$$Cf = Ca$$

$$i = \frac{Cf}{KV^2}$$

La différence $\Delta p$ des deux pressions fournies pour les orifices 12 d'extrados et 13 d'intrados est proportionnelle à l'incidence i de la girouette. Les orifices 12, 13 constituent donc des moyens de prise de pression différentielle représentative de l'incidence aérodynamique de la girouette et qui alimentent un capteur 15.

Plutôt que de déterminer cette incidence i, l'invention prévoit de l'annuler pour que l'orientation relative de la girouette fournisse directement l'incidence de l'aéronef.

Il est procédé à cette annulation au moyen du moteur 3 et de la boucle d'asservissement 14 dans laquelle il est inséré.

Le moteur 3 peut être un moteur à courant continu ou alternatif. Il est placé sur l'arbre 2 de la girouette 1 sans contact frottant, pour ne pas augmenter le couple de frottement Cf et ne pas diminuer la fiabilité de la sonde. Le moteur 3 apporte un couple Cm d'appoint, ou de correction, au couple aérodynamique Ca dont la somme est égale au couple de frottement Cf

$$Cf = Cm + Ca$$
$$= Cm + K V^2 i$$
$$i = \frac{Cf - Cm}{KV^2}$$

Ce couple moteur Cm est déterminé par la boucle d'asservissement 14, dont le signal d'erreur est le signal de sortie du capteur 15, pour que le couple moteur Cm soit égal au couple de frottement Cf et que l'incidence i de la girouette s'annule.

La sortie du capteur 15 est reliée à l'entrée d'un transducteur électrique 16 dont la sortie est reliée à l'une des deux entrées d'un amplificateur opérationnel 17 dont l'autre entrée est reliée à un générateur de consigne 18. La consigne est en l'occurrence 0 puisque l'asservissement vise à annuler i donc $\Delta p$. La sortie de l'amplificateur 18 alimente le moteur 3. Un organe 19 de recopie de la position angulaire de l'arbre 2, par exemple un resolver, fournit directement l'incidence vraie $\alpha m$ de l'aéronef.

En réalité, la pression différentielle $\Delta p$ dépend non seulement de l'incidence i de la girouette mais également de la vitesse conventionnelle V, selon la relation

$$\Delta p = k \left(\frac{1}{2} \rho V^2\right) i$$

dans laquelle k est une constante et $\rho$ la densité de l'air. Dans le domaine subsonique, V peut considérablement varier, dans un rapport de l'ordre de 10, entraînant une variation de $\Delta p$ dans un rapport de l'ordre de 100.

3

Si le signal d'erreur de la boucle d'asservissement 14 est $\Delta$ p, il faut alors pourvoir cette boucle d'un dispositif de contrôle de gain variable avec la vitesse. Pour s'affranchir de ce gain variable, on préfère adopter un autre signal d'erreur. Les collecteurs des orifices 12 d'extrados et 13 d'intrados alimentent un capteur 20 de pression statique $p_s$ et le collecteur des orifices 11, dans le plan de symétrie 8 de la girouette, un capteur 21 de pression totale $p_t$.

La pression dynamique $p_t$ - $p_s$ est donnée par la relation

$$p_t \; - \; p_s \; = \; \frac{1}{2} \, \rho \; V^2$$

Il en résulte que

$$\frac{\Delta p}{p_t - p_s} = ki$$

En substituant au signal du capteur 15 de pression différentielle le signal

$$\frac{\Delta p}{p_t - p_s}$$

comme signal d'erreur de la boucle d'asservissement, ainsi commandée par les capteurs 15, 20, 21, on s'affranchit donc de la vitesse V.

La sonde de l'invention est donc particulièrement bien adaptée pour être exploitée en tant que sonde multifonctionnelle dans le domaine subsonique.

## Revendications

1.  Sonde d'aéronef pour la mesure des paramètres aérodynamiques de l'écoulement ambiant de l'aéronef, comprenant une girouette (1) montée rotative (2) sur l'aéronef (7), destinée à s'orienter dans la direction de l'écoulement et pourvue de moyens (12, 13, 15) de prise de pression différentielle représentative de l'incidence aérodynamique de la girouette, et des moyens pour déterminer l'orientation de la girouette par rapport à l'aéronef, sonde caractérisée par le fait qu'elle comporte des moyens (14) d'annulation de l'incidence aérodynamique de la girouette, constitués d'un moteur (3) et d'une boucle d'asservissement (14).

2.  Sonde selon la revendication 1, dans laquelle les moyens (14) d'annulation de l'incidence de la girouette (1) sont commandés par les moyens de prise de pression différentielle (15).

3.  Sonde selon la revendication 2, dans laquelle les moyens de prise de pression différentielle (15) commandent une boucle d'asservissement (14) agencée pour exercer un couple moteur sur la girouette (1) destiné à s'opposer au couple de frottement.

4.  Sonde selon la revendication 3, comportant une prise de pression totale (11, 21) et une prise de pression statique (12, 13, 20), dans laquelle la boucle d'asservissement (14) est également commandée par les prises de pression totale et de pression statique pour s'affranchir de la vitesse de l'aéronef dans le domaine subsonique.

## Patentansprüche

1.  Fühler für Luftfahrzeuge zum Messen der aerodynamischen Parameter der das Luftfahrzeug umgebenden Strömung, umfassend eine Windfahne (1) die drehbar (2) an dem Luftfahrzeug (7) angebracht ist, dazu bestimmt, sich in Richtung der Strömung auszurichten, und die mit Mitteln (12, 13, 15) zum Abgriff des Differentialdrucks, welcher den effektiven Anstellwinkel der Windfahne repräsentiert, sowie mit Mitteln zur Bestimmung der Ausrichtung der Windfahne im Verhältnis zum Luftfahrzeug versehen ist, ein Fühler, dadurch gekennzeichnet, daß er Mittel (14) zur Nullsetzung des effektiven Anstellwinkels aufweist, die aus einem Motor (3) und einem Regelkreis (14) bestehen.

2.  Fühler nach Anspruch 1, bei dem die Mittel (14) zur Nullsetzung des Anstellwinkels der Windfahne (1) von den Mitteln zum Abgriff des Differentialdrucks (15) gesteuert werden.

3.  Fühler nach Anspruch 2, bei dem die Mittel zum Abgriff des Differentialdrucks (15) einen Regelkreis (14) steuern, der dafür vorgesehen ist, ein Drehmoment auf die Windfahne (1) auszuüben, das dem Reibungsmoment entgegengesetzt ist.

**4**

4. Fühler nach Anspruch 3, umfassend einen Abgriff des Gesamtdrucks (11, 21) und einen Abgriff des statischen Drucks (12, 13, 20), bei dem der Regelkreis (14) ebenfalls von den Abgriffen des Gesamtdrucks und des statischen Drucks gesteuert wird, um von der Geschwindigkeit des Luftfahrzeugs im Unterschallbereich unabhängig zu sein.

## Claims

1. Aircraft-mounted probe for measuring the aerodynamic parameters of the surrounding airflow of the aircraft, comprising a vane (1) mounted to rotate (2) on the aircraft (7), intended to be oriented in the direction of the flow and provided with means (12, 13, 15) for the intake of the differential pressure representative of the aerodynamic incidence of the vane, and means for determining the orientation of the vane with respect to the aircraft, which probe is characterised by the fact that it comprises means (14) for cancelling the aerodynamic incidence of the vane, which means are constituted by a motor (3) and a control loop (14).

2. Probe according to Claim 1, in which the means (14) for cancelling the incidence of the vane (1) are controlled by the differential pressure intake means (15).

3. Probe according to Claim 2, in which the differential pressure intake means (15) control a control loop (14) arranged to exert a driving torque on the vane (1) intended to oppose the frictional torque.

4. Probe according to Claim 3, comprising a total pressure intake (11, 21) and a static pressure intake (12, 13, 20), in which the control loop (14) is also controlled by the total pressure and static pressure intakes in order to become independent of the speed of the aircraft in the subsonic field.

FIG.1

FIG.2

FIG.3

$\alpha_m$